**Europäisches Patentamt**

**European Patent Office**

**Office européen des brevets**

(11) Veröffentlichungsnummer: **0 347 464**
**A1**

(12)
# EUROPÄISCHE PATENTANMELDUNG
Veröffentlicht nach Art. 158 Abs. 3 EPÜ

(21) Anmeldenummer: 88903124.1

(51) Int. Cl.³: **B 01 D 35/06**

(22) Anmeldetag: 24.12.87

Daten der zugrundeliegenden internationalen Anmeldung:

(86) Internationale Anmeldenummer:
PCT/SU87/00154

(87) Internationale Veröffentlichungsnummer:
WO89/05686 (29.06.89 89/14)

(43) Veröffentlichungstag der Anmeldung:
27.12.89 Patentblatt 89/52

(84) Benannte Vertragsstaaten:
DE FR IT SE

(71) Anmelder: UKRAINSKY INSTITUT INZHENEROV
VODNOGO KHOZYAISTVA
ul. Leninskaya, 11
Rovno, 266000(SU)

(72) Erfinder: GARASCHENKO, Vyacheslav Ivanovich
ul. Novorossiiskaya, 1-42
Rovno, 266027(SU)

(72) Erfinder: SANDULYAK, Alexandr Vasilievich
ul. Leninskaya, 96-2
Royno, 266000(SU)

(72) Erfinder: KORKHOV, Oleg Jurievich
ul. Kotlyarevskogo, 18-23
Rovno, 266000(SU)

(74) Vertreter: Ebbinghaus, Dieter et al,
Patentanwälte v. Füner, Ebbinghaus, Finck Mariahilfplatz
2 & 3
D-8000 München 90(DE)

(54) **ANORDNUNG ZUM TRENNEN VON FERROMAGNETISCHEN MATERIALIEN AUS FLÜSSIGEN MEDIEN.**

(57) Die Einrichtung zur Abtrennung ferromagnetischer Materialien von Fluida enthält einen Arbeitskanal 1, der durch eine Zwischenwand 2 in Sektionen 3 und 4 aufgeteilt ist, welche mit einer ferromagnetischen Füllmasse 5 ausgefüllt sind. Gleichachsig mit dem Arbeitskanal 1 ist ein Magnetisierungssystem /6/ angeordnet. Ein Mittel zur hin- und hergehenden Bewegung des Magnetisierungssystems /6/ ist in Form von mindestens zwei elektromagnetischen Spulen /7/ ausgebildet, die je eine an den entgegengesetzten Enden des Kanals /1/ angeordnet sind und deren Parameter ausgehend von der Bedingung gewählt sind, die Bewegung des Magnetsierungssystems /6/ zwischen zwei Endstellungen /I, II/ sicherzustellen.

FIG.1

Croydon Printing Company Ltd.

# EINRICHTUNG ZUR ABTRENNUNG FERROMAGNETISCHER MATERIALIEN VON FLUIDA

## Technisches Gebiet

Die vorliegende Erfindung bezieht sich auf Einrichtungen zur magnetischen Trennung von Stoffen und betrifft insbesondere Einrichtungen zur Abtrennung ferromagnetischer Materialien von Fluida.

## Zugrundeliegender Stand der Technik

Es ist eine Einrichtung zur Abtrennung ferromagnetischer Materialien von Fluida bekannt, die einen unbeweglichen Arbeitskanal, der mit einer Füllmasse aus ferromagnetischem Material gefüllt ist und einen Eintrittsstutzen für die Zuführung eines zu reinigenden Fluidums in den Kanal und einen Austrittsstutzen für den Auslass des gereinigten Fluidums besitzt, sowie ein Magnetisierungssystem in Form eines Solenoids enthält, das ausserhalb des Kanals koaxial zu ihm angeordnet und zur Aufmagnetisierung der ferromagnetischen Füllmasse vorgerichtet ist /DE, C, 1277488/.

Diese Einrichtung gewährleistet keinen kontinuierlichen Prozess der magnetischen Feinreinigung. Im Betriebszustand der Regenerierung der ferromagnetischen filternden Füllmasse dieser Einrichtung lässt man das zu reinigende Fluidum zeitweilig für die Regenerierperiode durch eine Umgehungsleitung vorbei am Arbeitskanal ohne Reinigung dieses Fluidums fliessen. Bei der Reinigung stark verunreinigter Medien wi wie Umlaufwasser im Hüttenwesen macht die Periode zwischen den Regenerierungen nur einige Stunden aus. In diesem Fall wird die gesamte Effektivität des Reinigungsprozesses nicht nur durch jene Effektivität, wo die Einrichtung im Betriebszustand der Reinigung funktioniert, sondern auch mit Rücksicht auf die Zeit des Regeneriervorgangs bestimmt, wo das Fluidum durch die Umgehungsleitung geleitet wird und in den technologischen Ablauf gelangt, indem es die gesamte Effektivität des Reinigungsprozesses vermindert.

Bekannt ist weiterhin eine Einrichtung zur Abtrennung ferromagnetischer Materialien von Fluida, die mindestens einen inbeweglichen Arbeitskanal, der durch eine hermetische Zwischenwand in zwei hintereinander liegende Sektionen aufgeteilt ist, von denen jede mit einer Füllmasse aus ferromagnetischem Material ausgefüllt ist, einen Eintrittsstutzen für die Zuführung eines zu reinigenden Arbeitsmediums in die Sektion und einen Austrittsstutzen für den Auslass des gereinigten Fluidums besitzt, sowie ein Magnetisierungssystem enthält, das ausserhalb des Kanals angeordnet, zur Aufmagnetisierung der ferromagnetischen Füllmasse der einen Sektion vorgerichtet und mit einem Mittel zur hin- und hergehenden Bewegung längs des Kanals zwischen zwei Endstellungen - an der einen Sektion und an der zweiten Sektion - versehen ist /US, A, 4602997/.

Bei der bekannten Einrichtung stellt das Mittel zur hin- und hergehenden Bewegung eine komplizierte elektromechanische Konstruktion dar, die einen Elektromotor, ein Getriebe, einen Schneckentrieb und Zugstangen zur Befestigung des Magnetisierungssystems am Schneckenrad einschliesst. Ausser den Hauptelementen umfasst das Mittel zur hin- und hergehenden Bewegung ein Schmiersystem für Getriebe und Schneckentrieb sowie einen sperrigen Tragkörper zur Befestigung von Baugruppen und -teilen. Das Vorhandensein von Hilfselementen macht die Konstruktion der Einrichtung noch komplizierter. Ausserdem besitzt dieses Mittel Elektromagnete, die zur Erzeugung eines magnetischen Kissens bei der Stillsetzung des Magnetisierungssystems miteingefügt sind.

Die Auf- und Abwärtsbewegung des Magnetsystems mit Hilfe des Elektromotors und des Schneckentriebs stellt einen verhältnismässig langsamen Prozess dar, für welchen bis zu mehreren Minuten aufgewendet werden. Der Elektroantrieb verbraucht dabei Elektroenergie während des gesamten Vorgangs der Bewegung des Magnetisierungssystems, und das verunreinigte Fluidum wird entweder in die Dränage abgeleitet, oder es gelangt in den technologischen Ablauf des Produktionsverfahrens und setzt die gesamte Effektivität und Wirtschaftlichkeit des Reinigungsprozesses herab.

Offenbarung der Erfindung

Der Erfindung liegt die Aufgabe zugrunde, eine solche Konstruktion der Einrichtung zur Abtrennung ferromagnetischer Materialien von Fluida zu entwickeln, die ein Mittel zur hin- und hergehenden Bewegung des Magnetisierungssystems enthalten würde, welches Mittel keine mechanischen Bindungen zur Übertragung des Kraftimpulses besitzt und es erlaubt, binnen einer kurzen Zeitspanne im Laufe von einigen Sekunden die Bewegung des Magnetisierungssystems von der einen Sektion zur anderen zu bewerkstelligen und einen praktisch kontinuierlichen Reinigungsprozess sicherzustellen.

Das Wesen der Erfindung besteht darin, dass in der Einrichtung zur Abtrennung ferromagnetischer Materialien von Fluida, enthaltend mindestens einen unbeweglichen Arbeitskanal, der durch eine hermetische Zwischenwand in zwei hintereinander liegende Sektionen aufgeteilt ist, von denen jede mit einer Füllmasse aus ferromagnetischem Material ausgefüllt ist, einen Eintrittsstutzen für die Zuführung eines zu reinigenden Fluidums in die Sektion und einen Austrittsstutzen für den Auslass des gereinigten Fluidums besitzt, sowie ein Magnetisierungssystem, das ausserhalb des Kanals angeordnet, zur Aufmagnetisierung der ferromagnetischen Füllmasse der einen Sektion vorgerichtet und mit einem Mittel zur hin- und hergehenden Bewedung längs des Kanals zwischen zwei Endstellungen - an der einen Sektion und an der zweiten Sektion - versehen ist, erfindungsgemäss das Mittel zur hin- und hergehenden Bewegung in Form von mindestens zwei elektromagnetischen Spulen ausgebildet ist, die je eine an den entgegegengesetzten Enden des Kanals angebracht sind, wobei ihre Parameter ausgehend von der Bedingung gewählt sind, die Bewegung des Magnetisierungssystems zwischen zwei Endstellungen zu gewährleisten.

Falls als Magnetisierungssystem ein Solenoid verwendet ist, das konzentrisch zum Arbeitskanal angeordnet ist, wird zweckmässigerweise an jeder Stirnfläche des Solenoids eine Eindrehung gemäss der Form der entsprechenden elektromagnetischen Spule ausgeführt.

Hierbei wird zweckmässigerweise am Boden der Eindrehung eine elastische Einlage angeordnet.

Es ist zweckmässig, die Einrichtung mit Feststellern des Magnetisierungssystems in dessen Endstellungen zu versehen , von denen jeder in Form eines Elektromagnets ausgebildet ist, der an einem der Enden des Kanals so befestigt ist, dass die Bewegungsrichtung seines Kernes zur Kanalachse senkrecht verläuft, sowie in der Seitenfläche des Solenoids Aussparungen gemäss der Anzahl der Elektromagnete einzuarbeiten, von denen jede zur Zusammenwirkung mit dem entsprechenden Kern vorgerichtet ist.

Man kann das Solenoid so ausführen, dass es eine ungeleichmässige Wicklung mit der zunehmenden Windungszahl vom zentralen Teil aus zu den Stirnseiten hin aufweist.

- 5 -

Dabei ist es wünschenswert, die Windungszahl an den Stirnseiten so zu wählen, dass sie die Windungszahl im zentralen Teil um 20 bis 40% übersteigt.

Falls die Einrichtung mit einem Mittel zur Kühlung des Magnetisierungssystems versehen ist, welches Stutzen für die Zu- und Abführung des Kältemittels besitzt, ist es zweckmässig, die Stutzen für die Zu- und Abführung des Kältemittels an den entgegengesetzten Enden des Kanals anzubringen, derart, dass ihre Achsen zur Kanalachse parallel sind, wobei jeder Stutzen mit einem Durchflussregler und einem Mittel zur Änderung der Zuführungsrichtung des Kältemittels zu versehen ist.

Die Einrichtung zur Abtrennung ferromagnetischer Materialien von Fluida, ausgeführt entsprechend der vorliegenden Erfindungs, zeichnet sich durch einfache Konstruktion, hohe Zuverlässigkeit, einfache technische Wartung aus.

Die Einrichtung gemäss der Erfindung gestattet es, die Zeit der Bewegung des Magnetisierungssystems von einer Arbeitssektion zur anderen wesentlich zu verkürzen, und sie gewährleistet einen praktisch kontinuierlichen Reinigungsprozess, was bei der Reinigung von stark verunreinigten flüssigen und gasförmigen Medien, beispielsweise von Umlaufwasser im Hüttenwesen, besonders vorteilhaft in Erscheinung tritt, wo die Überführung von einer Sektion zur anderen nach jeden 1 bis 2 Stunden wegen eines hohen Verschmutzungsgrades derselben vorgenommen werden muss.

Kurze Beschreibung der Zeichnungen

Im folgenden wird die Erfindung durch Beschreibung konkreter Ausführungsbeispiele derselben und anhand von beigefügten Zeichnungen erläutert, in denen es erfindungsgemäss zeigt:

Fig. 1 - die Gesamtansicht einer Einrichtung zur Abtrennung ferromagnetischer Materialien von Fluida, enthaltend einen Arbeitskanal, Längsschnitt;

Fig. 2 - dasselbe wie in Fig. 1, Draufsicht, ohne Führungen;

Fig. 3 - einen Schnitt nach Linie III-III der Fig. 1;

Fig. 4 - die Gesamtansicht einer Einrichtung zur Abtrennung ferromagnetischer Materielien von Fluida, enthaltend zwei Arbeitskanäle, Längsschnitt durch die Achse eines der Kanäle;

Fig. 5 - dasselbe wie in Fig. 4, Draufsicht, ohne Führungen;

Fig. 6 - einen Schnitt nach Linie VI-VI der Fig. 5;

Fig. 7 - die Gesamtansicht einer Einrichtung zur Abtrennung ferromagnetischer Materialien von Fluida, versehen mit Feststellern der Lage Magnetisierungssystems und einem Mittel zur Kühlung des letzteren, Längsschnitt;

Fig. 8 - einen Schnitt nach Linie III-III der Fig. 7;

Fig. 9 - einen Abschnitt A in Fig. 7 mit elektromagnetischen Spulen figurierter Form.

Beste Ausführungsformen der Erfindung

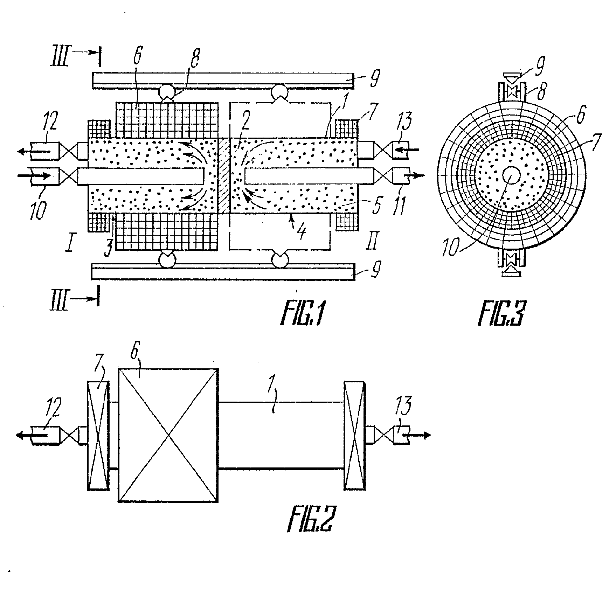

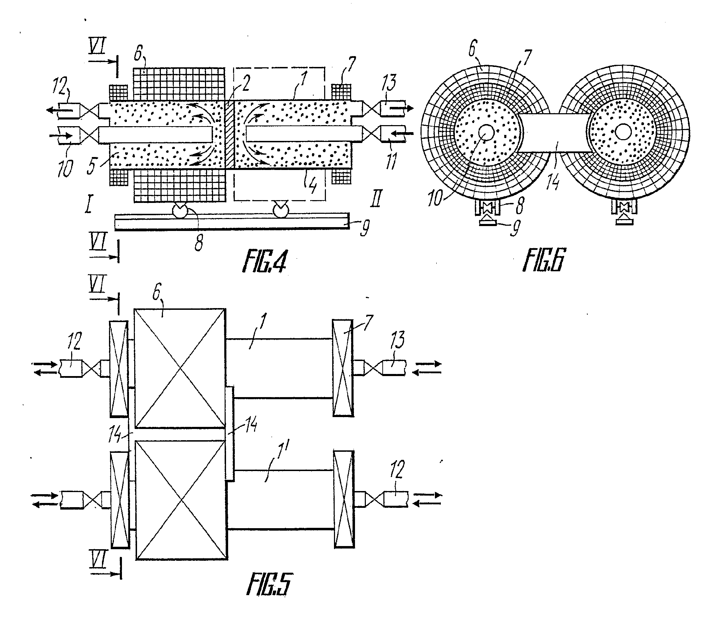

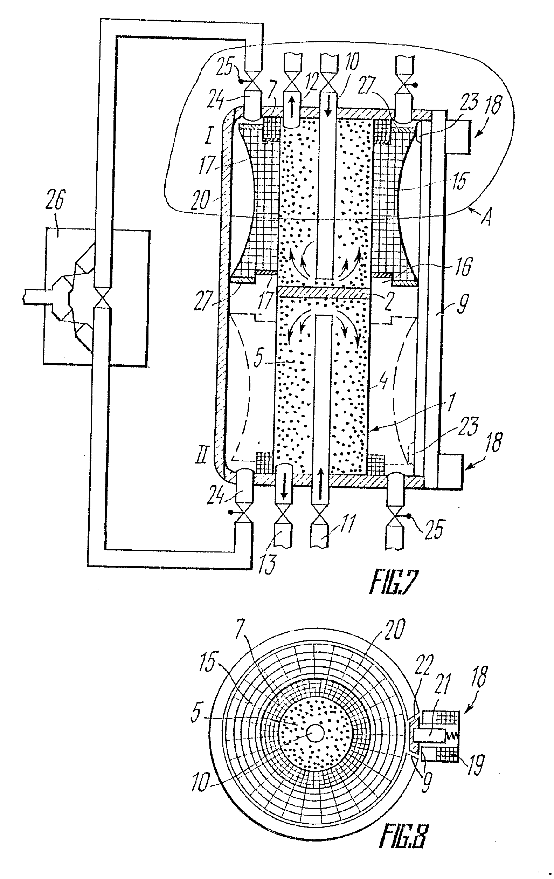

Die Einrichtung zur Abtrennung ferromagnetischer Materialien von Fluida, dargestellt in Fig. 1, 2, 3, enthält mindestens einen Arbeitskanal 1, der durch eine hermetische Zwischenwand 2 in zwei hintereinander liegende Sektionen 3, 4 aufgeteilt ist, von denen jede mit einer Füllmasse 5 aus ferromagnetischem Material ausgefüllt ist.

Als Füllmasse 5 kann ferromagnetisches Material beispielsweise in Form von Schrotkugeln, Spänen, Platten, Stäben aus Ferrit, Seignettedielektrika dienen.

Beim Einsatz der Einrichtung zur Feinreinigung von Fluida, darunter zur Reinigung flüssiger und gasförmiger Medien, soll die Füllmasse 5 ausserdem Antikorrosionseigenschaften aufweisen. Die Einrichtung enthält auch ein ausserhalb des Kanals 1 angeordnetes Magnetisierungssystem 6, das zur Aufmagnetisierung der ferromagnetischen Füllmasse 5 in der Sektion 3, wenn sich das Magnetisierungssystem in seiner Endstellung I befindet, wie dies in Fig. 1 gezeigt ist, oder der ferromagnetischen Füllmasse 5 in der Sektion 4, wenn sich das Magnetisierungssystem in der anderen Endstellung II befindet, vorgerichtet ist. Das Magnetisierungssystem 6 ist mit einem Mittel zur hin- und hergehenden Bewegung zwischen zwei Endstellungen (I für die Sektion 3 und II für die Sektion 4) versehen, welches Mittel in Form von zwei elektromagnetischen Spulen 7 ausgebildet ist, die je eine an den entgegengesetzten Enden des Kanals 1 angebracht sind. Die Parameter der Spulen 7 - die Windungszahl, die Stärke des den Spulen 7 zugeführten Stroms - sind ausgehend von der Bedingung gewählt, die Bewegung des Magnetisierungssystems 6 aus der einen Endstellung, z.B., I, in die andere Endstellung, z.B. II, sicherzustellen. In der hier beschriebenen Ausführungsform der Erfindung ist das Magnetisierungssystem 6 in Form eines mehrlagigen Solenoids, im folgenden des Solenoids 6, ausgebildet, das konzentrisch zum Arbeitskanal 1 mit einem Spalt in bezug auf dessen Aussenwand angeordnet ist. Zur Verminderung der Reibungskräfte und des Energieaufwandes für die Bewegung des Solenoids 6 ist das letztere mit Gleit- oder Wälzlagern 8 ausgestattet, welche mit Führungen 9 zusammenwirken. Die Sektionen 3, 4 sind jeweils mit einem Eintrittsstutzen IO, II für die Zuführung eines zu reinigenden Fluidums in die Sektion 3 bzw. 4 und einem Austrittsstutzen 12 bzw.

13 für den Auslass des gereinigten Fluidums versehen.

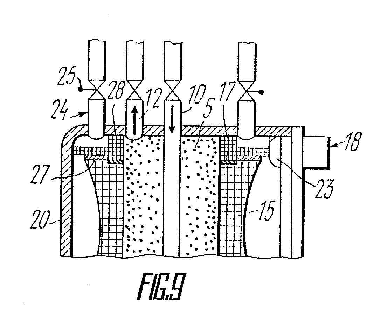

Die in Figuren 4, 5, 6 gezeigte Ausführungsform der erfindungsgemässen Einrichtung enthält zum Unterschied von der Ausführungsform nach Fig. 1, 2, 3 identische Arbeitskanäle 1 und $1^1$, von denen jeder sein eigenes Mafnetisierungssystem besitzt, das in Form eines mehrlagigen Solenoids 6 ausgebildet ist, wobei die Magnetleiter der Solenoide 6 mittels Überbrückungen I4 aus magnetischem Werkstoff mit niedrigem Kohlenstoffgehalt starr miteinander verbunden sind. Die Überbrückungen 14 gewährleisten die Erzeugung eines geschlossenen Magnetkreises und den durch Verminderung der Verluste des magnetischen Feldes erzielten notwendigen Magnetisierungspegel der Füllmasse 5 in ihrem Volumen vorwiegend zur Erhöhung des Magnetisierungspegels der stirnseitigen Zonen der Füllmasse 5. Darüber hinaus gewährleistet die starre Überbrückung 14 die synchrone Bewegung zweier Solenoide 6. Diese Ausführungsform ist in dem Fall vorteilhaft, wenn die Notwendigkeit der Reinigung grosser Fluidummengen entsteht. Der Durchmesser der Kanäle 1, $1^1$ erreicht in diesem Fall 0,5 - 0,2 m, die Länge der ferromagnetischen Füllmasse beträgt 0,5 - 1,5 m. Bei solchen Parametern der Einrichtung und bei Fehlen eines geschlossenen Magnetkreises erreichen die Verluste des magnetischen Flusses in die Umgebung 30 bis 60%. Das Vorhandensein der magnetischen Überbrückungen 14 erlaubt es, diesen Nachteil zu beseitigen.

In Figuren 7, 8 ist eine Ausführungsform der Einrichtung zur Abtrennung ferromagnetischer Materialien von Fluida mit der vertikalen Anordnung des Arbeitskanals 1 gezeigt, konzentrisch zu welchem ausserhalb desselben ein Solenoid I5 mit ungleichmässiger Wicklung der Windungen angeordnet ist. Die Windungszahl des Solenoids 15 nimmt von seinem zentralen Teil aus gegen die Stirnseiten hin zu, wobei die Windungszahl an den Stirnseiten des Solenoids I5 die Windungszahl in dessen zentralem Teil um 20 bis 40% übersteigt. An jeder Stirnfläche des Solenoids I5 ist eine Eindrehung 16 gemäss der Form der Stirnseite der Spule 7 eingearbeitet, und am Boden jeder Eindrehung 16 ist eine elastische Einlage 17 aus einem elastischen Material, z.B. Gummi, angeordnet. Diese Ausführungsform der Erfindungs ist ausserdem mit Feststellern 18 des Magnetisierungssystems (des Solenoids 15) in dessen Endstellungen I /obere Endstellung/ und II /untere Endstellung/ ausgestattet.

Jeder Feststeller 18 ist in Form eines Elektromagnets 19 ausgebildet, der am Gehäuse 20 der Einrichtung an einem der Enden des Kanals 1 so befestigt ist, dass die Bewegungsrichtung seines Kerns 21 senkrecht zur Längsachse des Kanals 1 verläuft, und in der Seitenfläche des Solenoids 15 sind Aussparungen 22 gemäss der Zahl der Elektromagnete 19 eingearbeitet, von denen jede zur Zusammenwirkung mit dem entsprechenden abgefederten Kern 21 vorgerichtet ist. Die Führung 9 hat in dieser Ausführungsform der Einrichtung eine Nut mit Schwalbenschwanzprofil. An den Stirnseiten des Solenoids 15 sind Vorsprünge 23 montiert, die eine Form aufweisen, welche der Form der Nut der Führung 9 zur Gewährleistung des Gleitens des Solenoids 15 längs der Führung 9 entspricht. In den Vorsprüngen 23 sind die Aussparungen 22 eingearbeitet, die mit den Kernen 21 beim Schliessen der Feststeller 18 zusammenwirken.

Diese Ausführungsform der Einrichtung ist auch mit einem System von Rohrleitungen zur Zuführung eines Kältemittels zum Solenoid 15 versehen. Dabei sind Stutzen 24 für die Zu- und Abführung des Kältemittels an den entgegengesetzten Enden des Kanals 1 angebracht, derart, dass ihre Achsen zur Längsachse des Kanals 1 parallel sind. Jeder Stutzen 24 ist mit einem Durchflussregler 25 ausgestattet, und das System von Kühlrohrleitungen ist mit einem Mittel 26 zur Änderung der Richtung der Kältemittelzuführung versehen. Das Gehäuse 20 der Einrichtung stellt eine geschlossene Hülle aus ferromagnetischem Werkstoff dar. Ausserdem sind an den Stirnflächen des Solenoids 15 Platten 27 aus ferromagnetischem Werkstoff befestigt, die einen geschlossenen magnetischen Kreis mit dem Gehäuse 20 bilden.

In der Ausführungsform der in Fig. 9 gezeigten erfindungsgemässen Einruchtung ist die elektromagnetische Spule 28 gestuft ausgeführt: im zentralen Teil hat sie eine grössere Höhe als im peripheren Teil, und ihr Aussendurchmesser ist dem Aussendurchmesser des Solenoids 15 gleich, wodurch eine grössere Oberfläche der Zusammenwirkung der elektromagnetischen Spule 28 mit dem Solenoid 15 sichergestellt wird.

In den Zeichnungen sind die Speisequellen und das Steuersystem für deren Ein- und Abschaltung der Deutlichkeit der Zeichnungen halber bedingt nicht gezeigt.

Die Einrichtung zur Abtrennung ferromagnetischer Materialien von Fluida arbeitet folgendermassen.

In Fig. 1, 2, 3 ist die erfindungsgemässe Einrichtung in einer Lage gezeigt, wenn die Sektion 3 der Einrichtung sich im Betriebszustand der Reinigung des Fluidums von ferromagnetischen Teilchen und die Sektion 4 im Betriebszustand der Regenerierung befindet. In die Spule des Solenoids 6 und in die elektromagnetische Spule 7, die sich am Ende des Kanals 1 auf der Seite der Stellung I befindet, führt man Ströme einer solchen Polarität zu, dass ihre Flussdichtevektoren nach einer Seite gerichtet sind. Das Solenoid 6 ist an diese Spule 7 angezogen. Die ferromagnetische Füllmasse 5 in der Sektion 3 ist aufmagnetisiert. Über den Stutzen 10 gelangt in die Sektion 3 das verunreinigte Fluidum, das durch die aufmagnetisierte filternde Füllmasse 5 fliesst und von dem in ihm befindlichen ferromagnetischen sowie nichtferromagnetischen Teilchen gereinigt wird, worauf es über den Stutzen 12 aus der Sektion 3 herausgeführt wird.

Die Sektion 4 der Einrichtung befindet sich in dieser Zeit im Betriebszustand der Regenerierung. Die elektromagnetische Spule 7, die auf der Seite der Sektion 4 /Stellung II/ liegt, ist stromlos, die ferromagnetische Füllmasse 5 in dieser Sektion ist entmagnetisiert. Der Sektion 4 führt man über den Stutzen 11 ein Wasser-Luft-Gemisch einer solchen Durchflussmenge zu, welche gewährleistet, dass die Granalien der Füllmasse 5 von Beimengungen bis zum erforderlichen Grad abgewaschen werden. Über den Stutzen 13 wird das verunreihigte abwaschende Gemisch abgeleitet.

Bei der Verunreinigung der Füllmasse 5 in der Sektion 3 wird das magnetisierungssystem /das Solenoid/ aus der Stellung I in die Stellung II bewegt. Dazu verändert man die Polarität des Speisestroms der Spule 7 an der Sektion 3, wodurch die Flussdichtevektoren dieser Spule 7 und des Solenoids 6 nach entgegengesetzten Seiten gerichtet sind - auf das Solenoid 6 wirkt eine Kraft in Richtung von der Spule 7 an der Sektion 3 weg. Gleichzeitig wird der Spule 7 an der Sektion 4 Strom von einer Polarität zugeführt, die eine gleichsinnige Richtung der Flussdichtevektoren des Solenoids 6 und der elektromagnetischen Spule 7 an der Sektion 4 gewährleistet - auf das Solenoid 6 wirkt eine Kraft in Richtung der Anziehung an die Spule 7 an der Sektion 4. Unter der Wirkung dieser Kräfte wird das Solenoid 6 über die Führungen 9 mit einer hohen Geschwindigkeit in die Stellung II bewegt. Die Zeit der Bewegung des Solenoids 6 aus der Stellung I /II/ in die Stellung II /I/ beträgt von einer bis zu mehreren Sekunden.

Nach der Bewegung des Solenoids 6 in die Stellung II nimmt man die Ausmagnetisierung der Füllmasse 5 in der Sektion 4 und die Entmagnetisierung der Füllmasse 5 in der Sektion 3 vor . Die Sektion 3 wird in den Betriebszustand der Regenerierung übergeführt, über den Stutzen IO wird in die Sektion 3 ein Wasser-Luft-Gemisch zugeführt, und das zu reinigende Fluidum wird dabei über den Stutzen 11 in die Sektion 4 zugeführt, welche jetzt im Betriebszustand der Reinigung funktioniert. Dank einer sehr geringen Zeit der Bewegung des Magnetisierungssystems von einer Sektion zur anderen arbeitet die Einrichtung praktisch im kontinuierlichen Betriebszustand der Reinigung.

Die in Fig. 4, 5, 6 gezeigte Ausführungsform der Einrichtung arbeitet ähnlich wie vorstehend beschrieben, mit dem einzigen Unterschied, dass das Vorhandensein von zwei Kanälen 1 und $1^1$ es erlaubt, die Leistung der Einrichtung bei gleichzeitiger Verringerung des Energieaufwandes zu steigern.

Dadurch, dass das Solenoid 15 /Fig. 7, 8/ an den Stirnflächen eine Eindrehung 16 gemäss der Form der elektromagnetischen Spule 7 aufweist, wird bei der Anziehung der "Eintritt" der Spule 7 in die Eindrehung 16 der Spule des Solenoids 15 gewährleistet. Hierbei kommt ein Teil der Windungen der Spule 7 in der unmittelbaren Nähe von der Stirnfläche des Solenoids 15 zu liegen. Dies trägt zur Vergrösserung der Kraftwechselwirkung der Spule des Solenoids 15 und der elektromagnetischen Spule 7 sowohl während der Anziehung /im Betriebszustand der Reinigung/ als auch während der Abstossung /Übergang zum Betriebszustand
der Regenerierung/ bei.

Die Vergrösserung der Windungszahl des Solenoids
15 vom zentralen Teil derselben aus zu den Stirnseiten
hin um 20 bis 40% gestattet es, einerseits die Magnetisierung der Stirnseitigen Zonen der ferromagnetischen Füllmasse 5 bis zum Magnetisierungspegel ihrer
zentralen Zone auszugleichen und andererseits die
Kraftwechselwirkung der Spule des Solenoids 6 und der
elektromagnetischen Spule 7 zu vergrössern, wobei eine
schnelle und exakte Bewegung und Fixierung in den Endstellungen I oder II des Solenoids 15 gewährleistet
wird. Das Vorhandensein der elastischen Einlagen 17
in den Eindrehungen 16 gewährleistet eine Stossdämpfung
bei der Bewegung des Solenoids 15 zur elektromagnetischen Spule 7, schützt das Solenoid I5 und die Spulen
7 vor Zerstörung und verlängert die Lebensdauer derselben.

Wird das Solenoid 15 in eine der Endstellungen
I oder II gebracht, so spricht der entsprechende Feststeller 18 an, der das Solenoid 15 in dieser Stellung
zuverlässig festhält. Bei der Notwendigkeit, das Solenoid 15 in die andere Endstellung zu bewegen, führt man
in die Spule des Elektromagnets 19 Strom zu, wobei der
Kern 21 unter Überwindung der Wirkung der Feder eingezogen wird, die Aussparung 22 verlässt und dem Solenoid 15 erlaubt, sich über die Führung 9 ungehindert zu bewegen.

Dadurch, dass die Stutzen 24 des Kühlsystems
gleichachsig mit dem Kanal 1 der Einrichtung angeordnet sind, bieten die aus ihnen ausfliessenden Kältemittelstrahlen, indem sie eine zusätzliche Kraft auf
die Stirnflächen des Solenoids 15 ausüben, die Möglichkeit, den Energieaufwand bei der Bewegung des Solenoids 15 aus der einen Endstallung 1 bzw. II in die andere herabzusetzen. Durch Änderung der Durchflussmenge des Kältemittels mit Hilfe des Durchflussreglers 25 erzeugt man eine Druckhöhe, die die Bewegung des Magnetisierungssystems begünstigt und gleichzeitig eine Erwärmung der elektromagnetischen Spulen 7 und des Solenoids 15 ausschliesst. Die ferromagnetischen Platten 27 erfüllen dabei die Funktion eines beweglichen "Kolbens", der mit den Druckstrahlen des Kältemittels bei der Bewegung des Solenoids 15 zusammenwirkt. Das Vorhandensein eines Kühlsystems mit den gleichachsig mit dem Kanal 1 angeordneten Stutzen 24, die mit dem Durchflussregler 25 und dem Mittel 26 zur Änderung der Richtung der Kältemittelzuführung ausgestattet sind, ist besonders bei der vertikalen Anordnung des Magnetisierungssystems und des Arbeitskanals 1 von Vorteil, wo zur Bewegung des Magnetisierungssystems von unten nach oben eine Anziehungskraft erforderlich ist, die dem Gewicht des Magnetisierungssystems gleich ist oder dasselbe übersteigt, während bei der Bewegung von oben nach unten eine Gegenwirkungskraft zur Dämpfung der Bewegung des Magnetisierungssystems in die untere Endstellung erforderlich ist.

Die in Fig. 9 gezeigte Ausführungsform der erfindungsgemässen Einrichtung arbeitet ähnlich wie die Variante nach Fig. 7, 8 mit dem einzigen Unterschied, dass die gestufte Ausführung der elektromagnetischen Spule 28 es gestattet, ausser der Gewährleistung der Bewegung des Solenoids 15 die Aufmagnetisierung der Endzonen der ferromagnetischen Füllmasse 5 zu bewerkstelligen. Im Betriebszustand der Reinigung ist die Spule 28 so geschaltet, dass die Flussdichtevektoren der Spule 28 und des Solenoids 15 /des Magnetisierungssystems/ nach einer Seite gerichtet sind, und dadurch findet bei der gewählten Form der Spule 28 eine Verstärkung der Aufmagnetisierung der Endzonen der ferromagnetischen Füllmasse 5 statt, die zur gleichmässigen Aufmagnetisierung der Füllmasse 5 im ganzen beiträgt.

## Gewerbliche Verwertbarkeit

Die Einrichtung zur Abtrennung ferromagnetischer Materialien von Fluida kann im Hüttenwesen, in der chemischen, wärmeenergetischen Industrie, im Maschinenbau, in der Gasreinigung, in der biologischen Industrie und anderen Industriezweigen vorwiegend zur Feinreinigung beispielsweise von Umlaufwasser, Ölen, Kondensaten, Ammoniakwasser, Ammoniak, Alkalilaugen, Abflüssen der Galvanik, Dampf, Gas und anderen Fluida von Korrosionsprodukten der Ausrüstigungen, von Verschleissprodukten der Teile von Maschinen und Mechanismen und so weiter verwendet werden.

PATENTASPRÜCHE

1. Einrichtung zur Abtrennung ferromagnetischer Materialien von Fluida, enthaltend mindestens einen unbeweglichen Arbeitskanal /1/, der durch eine hermetisch dichte Zwischenwand /2/ in hintereinander liegende Sektionen /3, 4/ aufgeteilt ist, von denen jede mit einer Füllmasse /5/ aus ferromagnetischem Material ausgefüllt ist, einen Eintrittsstutzen /IO, II/ für die Zuführung eines zu reinigenden Fluidums in die Sektion /3 bzw. 4/ und einen Austrittstutzen /12, 13/ für den Auslass des gereinigten Fluidums besitzt, sowie ein Magnetisierungssystem /6/, das ausserhalb des Kanals /1/ angeordnet, zur Aufmagnetisierung der ferromagnetischen Füllmasse /5/ der einen Sektion /3 bzw. 4/ vorgerichtet und mit einem Mittel zur hin- und hergehenden Bewegung längs des Kanals /1/ zwischen zwei Endstellungen /I, II/ an der Sektion /3/ und an der Sektion /4/ versehen ist, dadurch g e k e n n - z e i c h n e t, dass das Mittel zur hin- und hergehenden Bewegung in Form von mindestens zwei elektromagnetischen Spulen /7/ ausgebildet ist, die je eine an den entgegengesetzten Enden des Kanals /1/ angebracht sind, wobei ihre Parameter ausgehend von der Bedingung gewählt sind, die Bewegung des Magnetisierungssystems /6/ zwischen den Enstellungen /I und II/ sicherzustellen.

2. Einrichtung nach Anspruch 1, bei der als Magnetisierungssystem ein Solenoid /15/ verwendet ist, das konzentrisch zum Arbeitskanal /1/ angeordnet ist, dadurch g e k e n n z e i c h n e t, dass an jeder Stirnfläche des Solenoids /15/ eine Eindrehung /16/ gemäss der Form der entsprechenden elektromagnetischen Spule /7/ ausgeführt ist.

3. Einrichtung nach Anspruch 2, dadurch g e - k e n n z e i c h n e t, dass am Boden der Eindrehung

/16/ eine elastische Einlage /17/ angeordnet ist.

4. Einrichtung nach Anspruch 2, dadurch g e - k e n n z e i c h n e t, dass sie mit Feststellern /18/ des Magnetisierungssystems in dessen Endstellungen /I, II/ versehen ist, von denen jeder in Form eines Elektromagnets /19/ ausgebildet ist, der an einem der Enden des Kanals /1/ so befestigt ist, dass die Bewegungsrichtung seines Kerns /21/ zur Achse des Kanals /1/ senkrecht verläuft, wobei in der Seitenfläche des Solenoids /15/ Aussparungen /22/ gemäss der Anzahl der Elektromagnete /19/ eingearbeitet sind, von denen jede Aussparung zur Zusammenwirkung mit dem entsprechenden Kern /19/ vorgerichtet ist.

5. Einrichtung nach Anspruch 2, dadurch g e - k e n n z e i c h n e t, dass das Solenoid /15/ eine ungleichmässige Wicklung mit der zunehmenden Windungszahl vom zentralen Teil aus zu den Stirnseiten hin aufweist.

6. Einrichtung nach Anspruch 5, dadurch g e - k e n n z e i c h n e t, dass die Windungszahl an den Stirnseiten die Windungszahl im zentralen Teil um 20 bis 40% übersteigt.

7. Einrichtung nach Anspruch 1, die mit einem Mittel zur Kühlung des Magnetisierungssystems versehen ist, das Stutzen /24/ für die Zu- und Abführung des Kältemittels besitzt, dadurch g e k e n n - z e i c h n e t, dass die Stutzen /24/ für die Zu- und Abführung des Kältemittels an den entgegengesetzten Enden des Kanals /1/ angebracht sind, derart, dass ihre Achsen zur Achse des Kanals /1/ parallel sind, wobei jeder Stutzen /24/ mit einem Durchflussregler /25/ und einem Mittel /26/ zur Änderung der Zuführungsrichtung des Kältemittels versehen ist.

FIG.1

FIG.3

FIG.2

FIG.4

FIG.6

FIG.5

0347464

38091.6

FIG.7

FIG.8

FIG.9

0347464

# INTERNATIONAL SEARCH REPORT

International Application No PCT/SU 87/00154

**I. CLASSIFICATION OF SUBJECT MATTER** (if several classification symbols apply, indicate all) *

According to International Patent Classification (IPC) or to both National Classification and IPC

IPC$^4$  B01D 35/06

**II. FIELDS SEARCHED**

Minimum Documentation Searched [7]

| Classification System | Classification Symbols |
|---|---|
| IPC$^4$ | B01D 35/06, B03C 1/00 |

Documentation Searched other than Minimum Documentation
to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | US, A, 4244822 (The Babcock & Wilcox Company) 13 January 1981 (13.01.81) see the abstract, the drawing | 1-7 |
| A | SU, A3, 621306 (inofirma "Kraftwerk Union A.G.") 7 July 1978 (07.07.78) see the claims, the drawing | 1-7 |
| A | SU, A1, 1057074 (Ukrainsky institut in zhenerov vodnogo khozyaistva) 30 November 1983 (30.11.83) see column 2, lines 11-52, figures 1, 2 | 1-7 |

---

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 24 June 1988 (24.06.88) | 1 September 1988 (01.09.88) |

| International Searching Authority | Signature of Authorized Officer |
|---|---|
| ISA/SU | |

Form PCT/ISA/210 (second sheet) (January 1985)